# EUROPEAN PATENT APPLICATION

(11) **EP 3 372 355 A1**
(43) Date of publication of application: **12.09.2018**
(21) Application number: 16861132.5
(22) Date of filing: 16.08.2016
(51) Int. Cl.: B25J 9/10, A61D 7/00, A61K 39/00, A01K 43/06

(54) **SUBMODULE AND ASSOCIATED DEVICE FOR VARYING/ADJUSTING THE HEIGHT OF A PLATE SUPPORTING VACCINE/NUTRIENT INJECTORS FOR ADAPTING THE RATIO BETWEEN THE PATH OF THE NEEDLE AND EGG SIZE, USED IN SUBSTANCE APPLICATION MODULE OF AN EGG VACCINATION/NUTRITION SYSTEM AND EQUIPMENT**

(30) Priority: 03.11.2015 BR 102015227695
(71) Applicant: Ceva Saúde Animal Ltda., Santa Terezinha, Paulínia SP (BR)
(72) Inventor: BASTOS, César Da Silva, 13020-060 Campinas/sp (BR)
(74) Representative: Cabinet Becker et Associés
(86) International application number: PCT/BR2016/050199
(87) International publication number: WO 2017/075679

(57) **Abstract**

A submodule and the associated device for varying/adjusting the height of the plate supporting vaccine/nutrient injectors for adapting the ration between the path of the needle and egg size, used in a substance application module of an egg vaccination/nutrition system and equipment, represents a solution in the field of poultry breeding sector, and is particularly useful when applied to aid the operation of the application of vaccines, nutrients and/or nutritional vaccinal complexes to fertile eggs by injection into the egg, characterized in that, whatever the size of the eggs [Ov] in the batch, large eggs [Og], medium eggs [Om] or small eggs [Op], the introduction of a submodule for adjusting the height of the injectors [m32] in the substance application module [m3], using an actuation device [6], the operation of which is controlled by data regarding the size of the eggs [Ov] in the batch, allows an unprecedented protection of the embryo [05] from contact with the needle [3a], thus reducing the mortality rate and as a result optimizing poultry breeding productivity

## Description

### TERMINOLOGY

In order to better understand the subject matter disclosed and claimed in the present patent application, the meaning of some terms richly cited in the body of the descriptive report is shown, where:
- Egg-candling: is a procedure where it is verified if the eggs were fertilized (fertile) and if they are not, are removed from the process of breeding poultry or similar species. In turn, at the end of the procedure, the eggs classified as fertile are reclassified as large eggs, medium eggs and small eggs, so that batches are formed in trays which are only loaded by certain egg sizes;
- Avian species: its concept refers to poultry farming that is the breeding of poultry for food production, especially meat and eggs. Among the species raised on poultry, chicken stands out. On a much smaller scale, birds are also raised such as turkeys, ducks, geese, quails, and ostriches.
- PLC: Programmable Logic Controller is a specialized computer, based on a microprocessor that performs control functions through software developed by the user (each PLC has its own software); and
- HMI: Human Machine Interface.
- Substance application module: in which vaccination and/or nutrition are performed through injector devices provided with punches and needles for each defined egg housing niche in the incubation tray, wherein a computerized system releases the vaccine dose, nutrients or nutritional vaccine complex to the needles. A flow structure is provided for the application of substances such as vaccines/nutrients and an independent structure used for the application flow of concentrated sanitizer, applied to the disinfection of the needles after the substance application procedure. For the purpose of the present invention, only the flow structure for the application of substances as vaccines/nutrients will be shown and discussed.

### FIELD OF APPLICATION

The present invention patent with title in the epigraph and subject of description and claim in this cartouche, deals with an inventive solution that finds outstanding benefit in the sector of poultry, notably in the sector of poultry breeding, and more specifically in the stage of application of vaccines and or nutrients or nutritional vaccine complexes in fertile eggs, by means of intra-egg injection.

More specifically, the invention finds particular utility when applied as an aid to the operating sub-modules of a of substance application module in fertile eggs, notably an application of "intra-egg" nature.

### DEMAND OF THE INVENTION

In view of the field of application in the poultry segment, the segment specialists know that there are two control factors that must be taken into account to ensure the productivity with quality of poultry, notably broilers and their disease control measures, performed through specific vaccination procedures and, more recently, the nutritional control of the embryo.

By choosing the nutritional control as the development paradigm of the present invention, it is also known in the area of broiler breeding that an earlier embryo's access to the nutrient leads to a stimulation of the digestive enzymes and consequent further development of the intestinal villi (Geyra et al., 2001).

Foye et al., 2005 and Smirnov et al., 2004 embrace this understanding, adding that the access of the embryo to nutrients by improving the development of the digestive system leads to a better productivity, the broilers reaching an increased weight in less time.

In turn, it has been demonstrated that the embryo possesses digestive enzymes (Sklan et al., 2003) that make nutrition possible in the pre-hatching phase.

Considering this scenario, "in-egg nutrition" was in the poultry's pre-hatching phase, in which this process in tight synthesis, can be explained as being performed by perforating the shell of the embryonated egg and then inoculating the nutrient in the amniotic fluid by means of a syringe (Leitão et al., 2005; Gonzales et al., 2003), and once this environment of development of the embryo has been nutritionally supplemented from the 15^{th} day of incubation, it starts to ingest the amniotic fluid with nutritional supplement (Klasing, 1998).

Thus, it is possible to conclude that if an early feeding is administered to this poultry species, especially in its embryonic phase, its digestive tract develops a greater absorption capacity.

With the pertinent shown scenario to the new demand for intra-egg nutrition, it was created the need to offer to the market equipment with this new function of "providing inoculation of nutrients" in addition to the function of "providing inoculation of vaccines" in a safely way, i.e., without the risk of injuring or even bring to death the embryo by improper contact and penetration of the injection needle.

In an allusive way, it is possible to affirm that this new equipment may have the technical basis of the already widely known technical and commercial equipment as "egg vaccinators", as it will be adequately argued in the development of this cartouche.

### DEMANDS OF THE INVENTION

In accordance with the demand of the invention the applicant conceived the "SUB-MODULE AND ITS DEVICE FOR VARYING/ADJUSTING THE HEIGHT OF THE INJECTOR SUPPORT PLATE OF VACCINE/NUTRIENTS FOR SUITABILITY OF THE NEEDLE COURSE/EGG SIZE RATIO APPLIED IN THE SUBSTANCE APPLICATION MODULE OF AN EGG VACCINATION/NUTRITION EQUIPMENT SYSTEM" provided with novelty associated with inventive activity, since it is not obvious or evident from other techniques anticipated by the state of the art, conferring advantages from the industrial, commercial and technical points of view in relation to equipment developments exclusively for the intra-egg procedure.

In addition, the "invention" is provided with industrial applicability, being economically feasible and therefore, meets the stringency of patentability requirements, notably as a patent of invention, as provided for in the provisions of articles 8 and 13 of Law No. 9.279.

### FUNDAMENTALS OF THE TECHNIQUE

In order to provide veracity, and to consolidate the explicit context in the topics of the introductory table, an explanation is presented on the state of the art for techniques of inoculation of fluids in eggs, especially of an "intra-egg" nature, in which after a critical analysis of these, once evaluated by technicians with expertise in the science of inoculation of intra-egg substances, will be able to identify its limiting aspects, thus consolidating the identification of previously cited demand.
a. The invention development paradigm: it is firstly necessary to establish the requirements for the safe inoculation of substances into fertile eggs, the ideal situation of which is that the measurement occurs only in the region of the amniotic fluid, i.e. without physical contact of the injector's needle of the substance application module with the physical body of the embryo.
a.1 Vaccine injection: a priori the inoculation of vaccines presents a lower risk of compromising the embryo's development in the event of physical contact where even if it occurs, it is not harmful to the embryo as long as the injection needle does not penetrate the embryo's body, i.e. there should be only a contact with maximum subcutaneous penetration, and can in no way reach vital embryo's organs.
a.2 Nutrient injection: is a more restrictive condition than that observed for the injection of vaccines, since the direct injection of nutrients is prohibitive, i.e., in the body of the embryo, even if subcutaneously, with penalty of compromising its development and even bring the embryo to death.
b. State of the art: the inoculation of fluids into fertile eggs is a well-known practice and is particularly widespread for the inoculation of vaccines.
   Studies in the patent database reveal a number of techniques for the inoculation of vaccines in fertile eggs. In essence, they all have the same fundamental principle, which consists in the use of a punch to create an opening in the eggshell, and in then a needle is applied that enters the egg, and, depending on the type of application and vaccine for example, it can be introduced until reaching the embryo and penetrate its muscular tissue, only then the vaccine will be injected.
   Within this basic concept it is pertinent to refer to U.S. Patent No. US4903635, filed on June 18, 1987, with title "HIGH SPEED AUTOMATED INJECTION SYSTEM FOR AVIAN EMBRYOS", which can be described as an automated high speed injection system of fluid substances within fertile eggs, including an eggshell opening device in the form of a tubular punch, and a device for injecting fluid into the egg in the form of an injection needle positioned within the tubular perforator.
   Also within this scope it is pertinent to refer to the U.S. Patent No. US7503279, filed March 2, 2007 with title "AUTOMATED EGG INJECTION MACHINE AND METHOD" and U.S. Patent No. US 5136979, filed September 19, 1991, with title "MODULAR INJECTION SYSTEM FOR AVIAN EMBRYOS", both with the same constructive concept of US4903635.
c. Identification of problems: although the above-mentioned patent documents are effective for the purpose of intra-egg injection, it is possible to list some restrictive aspects, from which it is pertinent to mention:
   - This equipment is exclusively developed for injection of vaccines, not considering, therefore, the restrictive condition of the exclusive injection of nutrients in the amniotic liquid (and never in the body of the embryo), i.e., the substance application module.
   - Even considering the use of the equipment exclusively as a vaccinator, there is a risk of the needle advancing into the embryo's body, penetrating vital organs of the same and leading to death. Considering a loading batch from the candling module, as having a few dozen fertile eggs, this is a determining factor that compromises productivity at the end of the breeding stage;
d. Why the problems occur: The objective of the operation of the present equipment or intra-egg substance application modules, reveals that the problems previously evidenced are due to a constructive and operational concept of the multiple injection devices for substances, where all solutions listed in the state of the art exhibit their injection devices whose operation is dictated by a single maximum stroke of the needle entering the egg to be vaccinated/nourished, with no possibility of adjustment.

In an allusive way, it is understandable that the size of fertile eggs loaded from the candling module is not considered, which means that the total course of penetration of the needle within each fertile egg is exactly the same.

This operational condition evidences that the possibility of aggression of the embryos by injection needle's penetration is increased when the batch of loaded eggs is for small eggs and is smaller when the batch of loaded eggs is for large eggs.

In tight synthesis, it is possible to conclude that equipment of the egg-vaccinating type [which may also be a nutrient applicator] has its best operational condition for large egg batches, and this does not guarantee the absence of needle penetration into the embryo. Progressing in the study on the condition of injection of intra-egg substances, this time having as a paradigm the injection of nutrients, the state of the art is revealing that the applicant and holder of this patent owns a differentiated technology regarding manufacture and constructive concept of injection needles as seen in patent invention BR 102015019878-7 filed on 10/08/2015 entitled "NEEDLE-APPLIED IMPROVEMENT FOR INOCULATING NUTRIENTS TO THE INTERNAL ENVIRONMENT OF FERTILE EGGS", in an allusive way, shows a new arrangement at the end of the injection needle in place of the consecrated bevel end concept, wherein a closed and rounded end with lateral openings is revealed, preventing perforation of the embryo's epidermis.

However, the new injection needle (even without piercing end) is not sufficient to prevent penetration into the intramuscular cavity of the embryo, this is due to the force exerted by the plunger of the injection device.

### PROPOSAL OF THE INVENTION

a. Objective: it is an object of the present invention to give the substance application module enough accuracy to apply them only to the surface volume of the egg's amniotic fluid i.e., in an individualized manner for each fertile egg from the batch of eggs loaded in trays originating from the egg-candling module.
   For a better understanding of this "intra-egg" substance application condition, the concept of "useful area of injection of substances" will be introduced, which by definition should also be the volume of the upper region of the amniotic fluid, in which the presence of the end of the injection needle is safe without the embryo running the risk of being physically injured.
b. Distinctive feature: in order to render the object of the invention feasible, a sub-module and corresponding device has been designed which takes into account the variation/height adjustment of the vaccine/nutrient injector support plate for suitability of the needle course/egg size ratio applied in the substance application module of an egg vaccination/nutrition system and equipment, wherein such a system also depends on the recognition of the preliminary information on the classification of the egg size of the trays.
   For this, to the action management module, in the form of application software and PLC technology, is introduced a routine for recognition and treatment of the information about the size class of eggs that is loaded in the tray.
   In turn, after the egg size class is identified, such information is sent to the sub-module and its corresponding device for height adjustment of the vaccine/nutrient injector support plate which promotes the suitability of the stroke/size of the egg, and therefore finds the suitable position of the "useful area for substance injection" for egg size, and three values are defined:
   - useful area of injection for large eggs;
   - useful area of injection for medium eggs; and
   - useful area of injection for small eggs.

   Once the appropriate injection area has been established and the support plate is properly positioned in that coordinate, the needle feed sub-module is activated, always at maximum stroke, as in the conventional operating concept.
c. Desired technical effect: the embedded logic for the optimized operation of the substance application module is framed in the height adjustment of the support plate, and not in the individualized control of the course of each needle from each injector device, which makes the implementation of the stated objective at reduced cost and, therefore, provided with industrial application.

### DESCRIPTION OF THE FIGURES

To complement the present description in order to obtain a better understanding of the features of the present invention, and in accordance with a preferred practical embodiment thereof, the attached description is accompanied by a set of drawings, wherein:
Fig. 1 is an illustrative representation in perspective view of the constructive concept of the substance application module in fertile eggs anticipated by the state of the art, with reference to Fig. 2 of U.S. Patent No. 6,286,455, showing its main functional sub-modules and their component parts;
Fig. 2 is an illustrative representation, in front view of the constructive concept of the substance application module in fertile eggs as anticipated by the state of the art, showing its main functional sub modules and respective component parts;
Figs. 3a and 3b are a figurative representation, in the form of a block diagram of the macro-architecture of the conventional intra-egg substance application system, showing only the functional sub modules and respective devices related to the preparation, adjustment, needle advancement and release of substances;
Figs. 4a, 4b, 4c and 4d are a figurative representation of the sequential operational actions described by the functional sub-modules and their respective devices relating to the preparation, adjustment and advancement of intra-egg needles;
Fig. 5 is a figurative representation of the technical effect obtained when applying intra-egg substances to the conventional system of application of substances;
Fig. 6 is a graphical representation, showing the explicit problem on the harmful effect close to the embryo in the case of different levels of undue penetration of the injection needle into the egg size classes: large, medium and small;
Fig. 7 is an illustrative representation, in front view, of the constructive concept of the substance application module into fertile eggs as anticipated by the state of the art, with its main functional sub modules and respective component parts showing the inventive device allowing height adjustment of the support plate;
Figs. 8a and 8b are a figurative representation, in the form of a block diagram of the macro-architecture of the inventive intra-egg substance delivery system, showing only the functional sub modules and respective devices, especially the sub-module and height adjusting device of the injector support plate;
Figs. 9a and 9b are an illustrative representation of the first step of the intra-egg application procedure, with preliminary accommodation of the injectors end [with their respective retracted needles] on the upper outer shell of the eggs, such a step is identical to the conventional system;
Figs. 9b and 9c are an illustrative representation of the second stage of the substance application procedure, with the simultaneous locking of the injectors [with their respective retracted needles] in the position of contact with the eggs, by means of a locking device, such step being identical to the conventional system;
Fig. 9d is an illustrative representation of the third and unprecedented stage of the substance application procedure, with the suitability of the needle course/egg size ratio, with the displacement of the support platform to the previously defined height for a batch of large eggs;
Fig. 9e is an illustrative representation of the fourth and unprecedented stage of the substance application procedure with the movement of the entire course of the needle into the egg shell previously defined for a batch of large eggs at its end to find the "useful injection area";
Fig. 9f is an illustrative representation of the third and unprecedented stage of the substance application procedure with the suitability of the needle course/egg size ratio with the displacement of the support platform to the pre-defined height for a batch of medium eggs;
Fig. 9g is an illustrative representation of the fourth and unprecedented stage of the substance application procedure with the movement of the entire course of the needle into the egg cavity previously defined for a batch of medium eggs, until its end meets the "useful injection area";
Fig. 9h is an illustrative representation of the third and unprecedented stage of the substance application procedure, with the suitability of the needle course/egg size ratio, with the displacement of the support platform to the previously defined height for a batch of small eggs small;
Fig. 9i is an illustrative representation of the fourth and unprecedented stage of the substance application procedure with the movement of the entire course of the needle into the egg interior previously defined for a batch of small eggs until its end encounters the "useful injection area"; and
Fig. 10 is a graphical representation, the appreciation of which shows the desired technical effect for the application of intra-substances in the case of different levels of undue penetration of the injection needle into the large, medium and small egg size classes.

### DETAILED DESCRIPTION

The following detailed description should be read and interpreted with reference to the exhibited drawings and block diagram, which represent the state of the art for the conventional system of application of intra-egg substances, with six functional modules and technical effect obtained, showing their negative aspects, as well as the drawings and block diagram for the invention in the form of a *"sub-module and its device for varying height adjustment of the vaccine*/*nutrient injector support plate for adjusting the needle course*/*size ratio of the egg",* and is not intended to limit the scope of the invention, this is only limited to what is set forth in the claim.

### a. State of the Art:

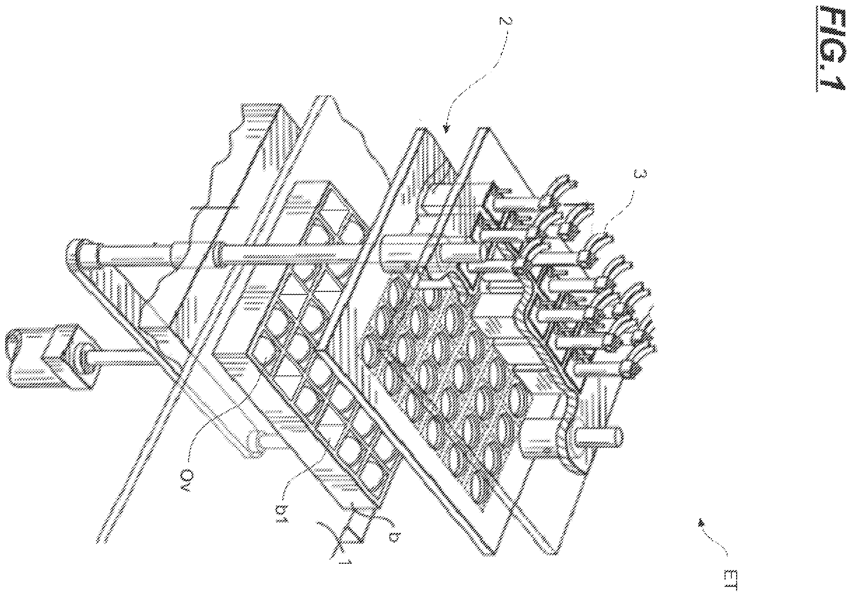

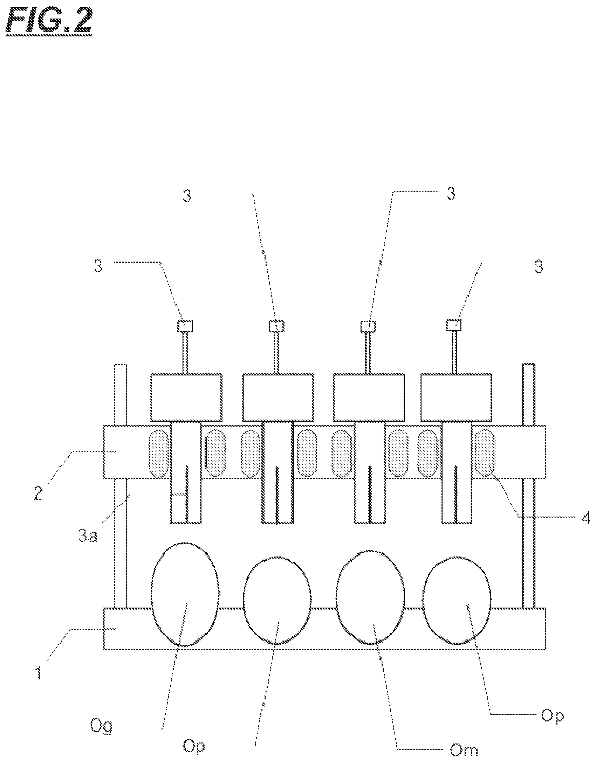

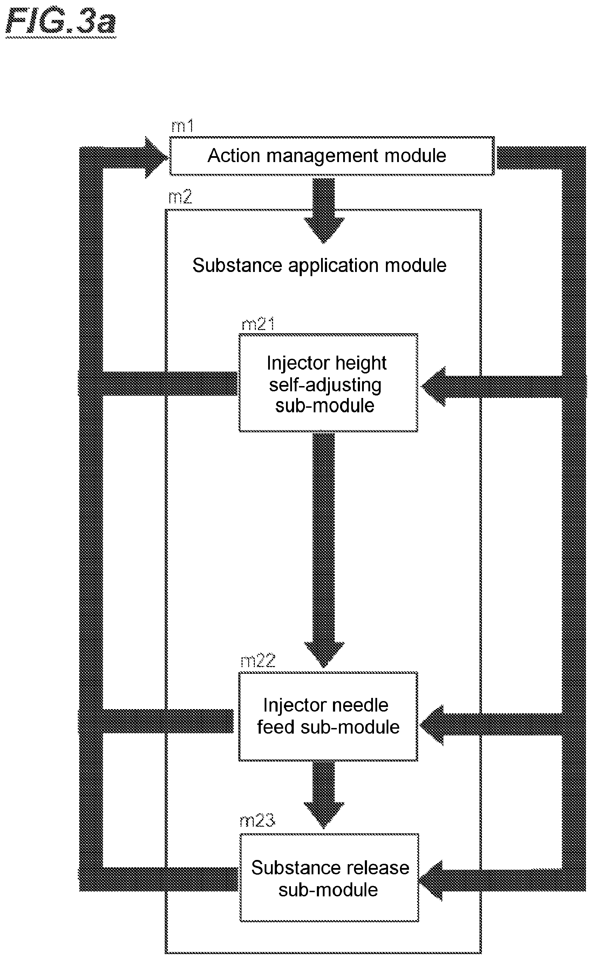

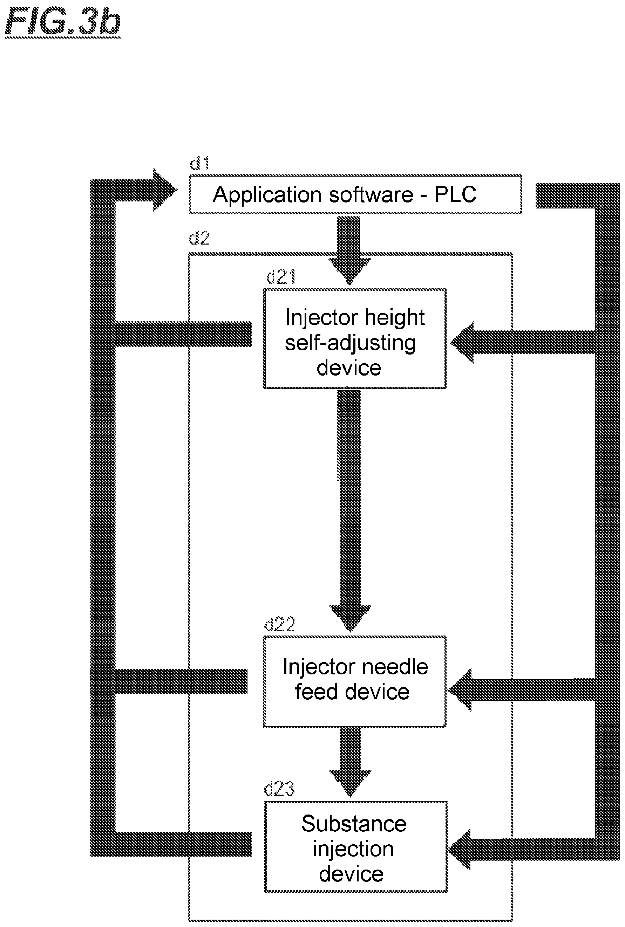

a.1 Constructive concept of the conventional system for applying substances [Et] as shown in Figs. 1 and 2, it consists essentially of the following devices:
   - horizontal platform displacement (1): has the function of providing the displacement and positioning of the tray (6) in an aligned form under the matrix of injecting devices (3);
   - supporting platform (2): has the function to provide the assembly and stabilization of the injector matrix (3) and also its vertical displacement;
   - injectors [3], have the function to open the access to the interior of the egg [Ov], by means of a punch-type shell open mechanism and an injection needle [3a], in the most varied possible configurations.
      The punch is introduced into the egg (Ov) through a mechanical drive, in which the injectors (3) are aligned above the eggs (Ov), wherein a connector for substance access (vaccine or vaccine) is defined at the top of each injector (3) for substance (vaccine or nutrient) access, and a connector for access to the sanitizing substance;
      The components and punch and needle end (3a) when in nonoperational condition are retracted inside the housing or head of the injector (3);
   - Injector locking device [4]: operates with two controlling variables, the first being the positioning on Cartesian axis Z, which depends on the egg size [Ov] arranged in the niche of the corresponding tray [5] of each injector device [3] and stability of the injector device [3] in the position of the Cartesian axis Z defined, which, in a conventional embodiment, the plurality of injectors [3] is positioned and supported in a respective plurality of openings defined on a support plate [2] to which inflatable elements [4] are accommodated. In this way, the injector device [3] has its body assembled by the inflatable elements [4], which, once actuated by the PLC of the equipment, begin to embrace and fix these injector devices [3] in the Cartesian position Z previously defined by the height of the egg [Ov] of the corresponding niche of the egg tray.
   - Tray (5) provided with a plurality of niches where the fertile eggs are accommodated (Ov), and
   - Fertile eggs [Ov]: which can be classified as large eggs [Og] medium eggs [Om] and small eggs [Op].
a.2 Architecture of the conventional system for application of substances: the understanding of the constructive concept of all conventional intra-egg substance application equipment, shown in Figs. 1 and 2, and duly described in detail, subsidizes the best understanding of the conventional macro intra-egg application system [Et] as shown in Figs. 3a and 3b, whose macro-system architecture is formed by the following functional modules:
   - Action management module [m1]: in the form of a device such as the application software/PLC [d1], which in essence has the control function of the sub-modules that make up the substance application module [m2];
   - Substance application module [m2]: composed of numerous operating sub-modules, where for purposes of the present invention is pertinent to describe:
   - Injector height self-adjusting sub-module [m21]: with the function of providing the proper adjustment of each lower end of each injector [3], is formed by the support plate [2] with an embedded locking device [4], wherein in each niche of this support plate [2] are mounted respective injectors [3], wherein its operation is managed by the application software [d2] of the substance application module [m2];
   - Injector needle feed sub-module [m22]: with the function of effectively promoting eggshell perforation [Ov] and immediate advancement of the injection needles [3a] of each injector [3] to the interior of the eggs [Ov], and for the purpose of the present invention, it is sufficient to mention that this module is composed by the injectors [3] where the punches [not shown] and needles [3a] functioning is controlled by the application software [d2] of the substance application module [m2]; and
   - Substance injection sub-module [m23]: with the function of promoting the inoculation of substances through the needle [3a] inside the egg [Ov], and for this purpose, is composed by substance reservoirs [not shown] feeding via connector tubes [also not shown] the respective injectors [3], and its feeding and substance release operations via needle [3a] is controlled by the application software [d2] of the substance application module [m2];

### a3. Conventional operating method of the substance application module:

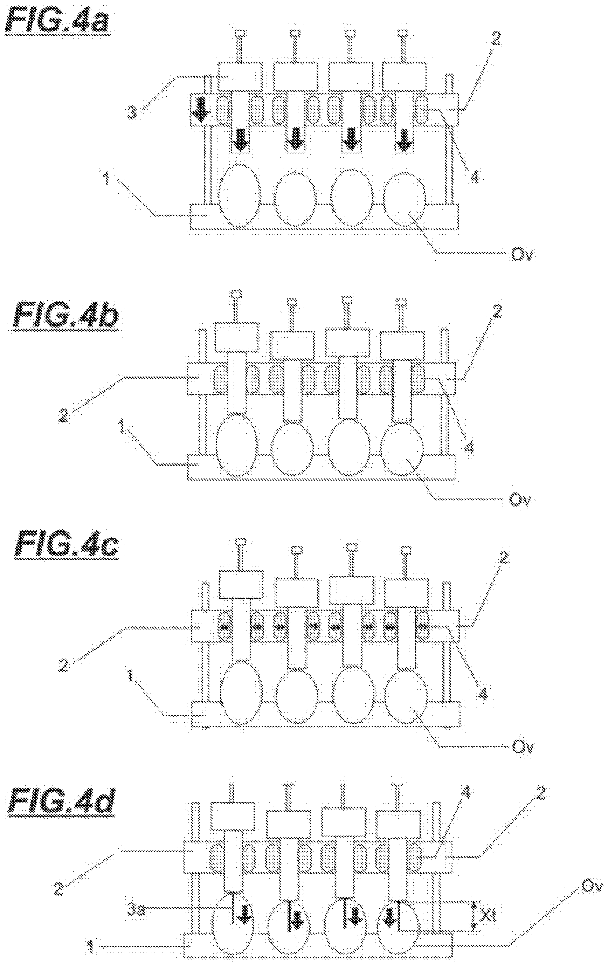

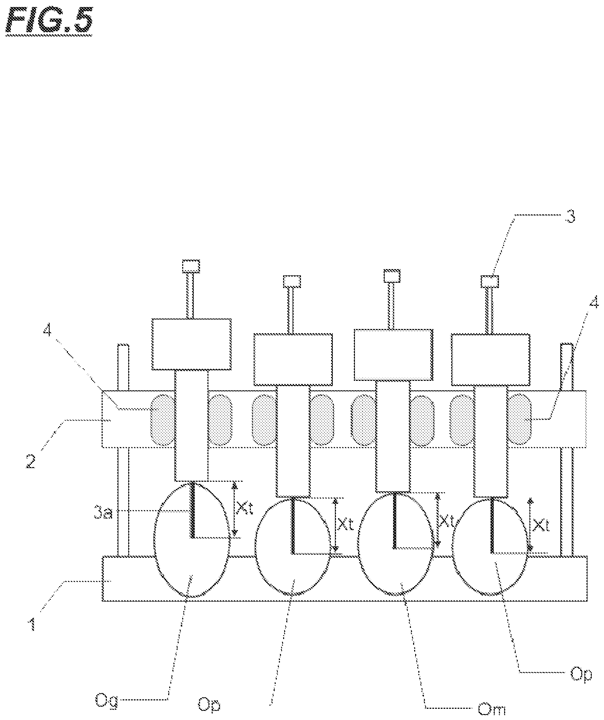

Preliminarily, the condition for the operation of applying intra-egg substances is that a tray [5] properly loaded with eggs [Ov] is positioned immediately below the support plate [2], where this condition is defined by the conventional adjustment process of height of the lower end of the injectors [3] relative to the top of the eggshell [Ov], and can be understand by the following sequential steps:
- Step 1 - As shown in Fig. 4a, the locking device [4] present on the support plate [2] is not actuated, creating a condition wherein the plurality of injectors [3] with needle [3a] is released, wherein the management module [m1] sends a signal for the vertical downward displacement of the support plate [2] assembly with locking device [4] and plurality of injectors [3], this downward movement being managed by the application software/PLC [d2] of the management module [m1];
- Step 2 - As shown in Fig. 4b, the vertical downward displacement of the support plate [2] assembly with locking device [4] and plurality of injectors [3] occurs until the contact moment is established between the injector [3]/eggs [Ov], once this contact is established, a signal is sent to the application software/PLC [d2] of the management module [m1], which interrupts the assembly's descending movement;
- Step 3 - As shown in Fig. 4c, upon cessation of the downward movement of the support plate [2] assembly and injectors [3], the same application software/PLC [d1] of the management module [m1] sends a signal by actuating the locking device [4], where the inflatable elements are inflated so that each injector [3] is fixed in the previously obtained position;
- Step 4 - As shown in Fig. 4d, the same application software/PLC [d1] of the management module [m1] sends a signal to the injector needle feed sub-module [m22], the needles [3a] advancing to the interior of the egg [Ov], always in full course [Xt], and the particularity of this procedure lies in the fact that the needles advance [3a] is in total stroke, i.e., independent of egg size [Ov] as evidenced in Fig. 5;
- Step 5 - Upon reaching the end of stroke of the needles [3a] of the injectors [3] as shown in Fig. 4d, a "needle limit stroke" signal is sent to the application software/PLC [d1] of the management module [m1], which releases the activation signal from the substance injection sub-module [m23];

### a.4 Technical effect obtained:

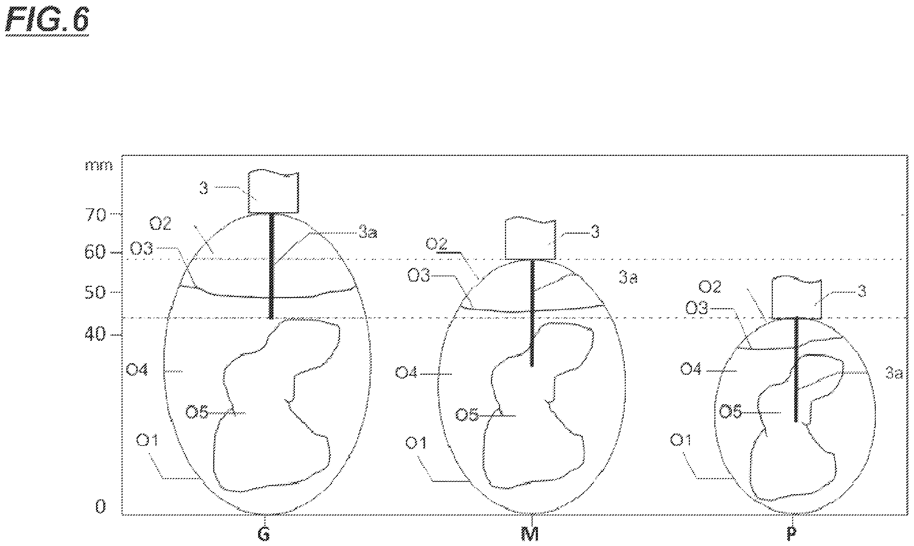

As shown in the graph of Fig. 6, the alphanumeric references are described, such as egg [O1], shell [O2], amniotic fluid surface [O3], amniotic fluid volume [O4], embryo [O5], injector [3], injection needle [3a].

The graph in Fig. 6 shows that the procedure of total advancement of needles [3a] may be harmful to the embryo [O5] when the size of the egg [Ov] is not considered, and such a harmful condition is more critical when there are batches of medium eggs [Om] and batches of small eggs [Op], since it is almost certain that the injection needle [3a] will penetrate the embryo [O5] much more than superficially, as is allowed for example for the application of vaccines, but prohibitive for the application of nutrients.

### b. Regarding the inventive concept applied to the equipment:

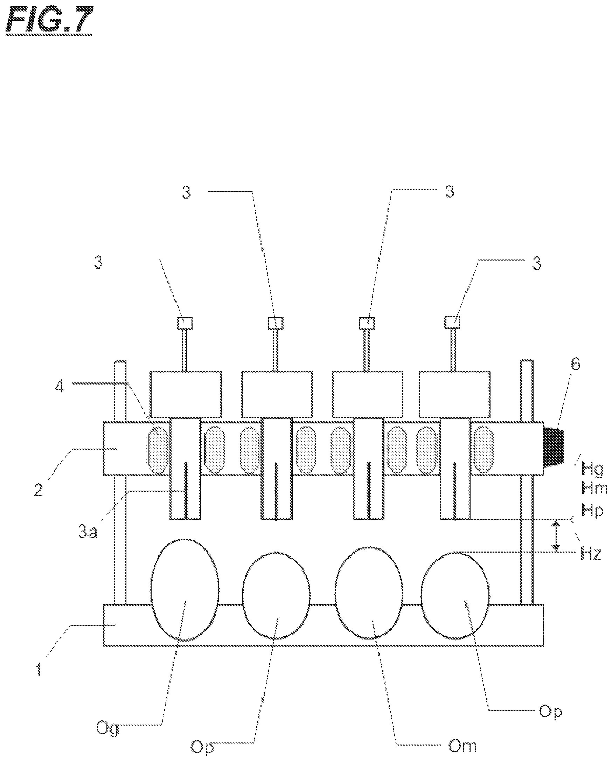

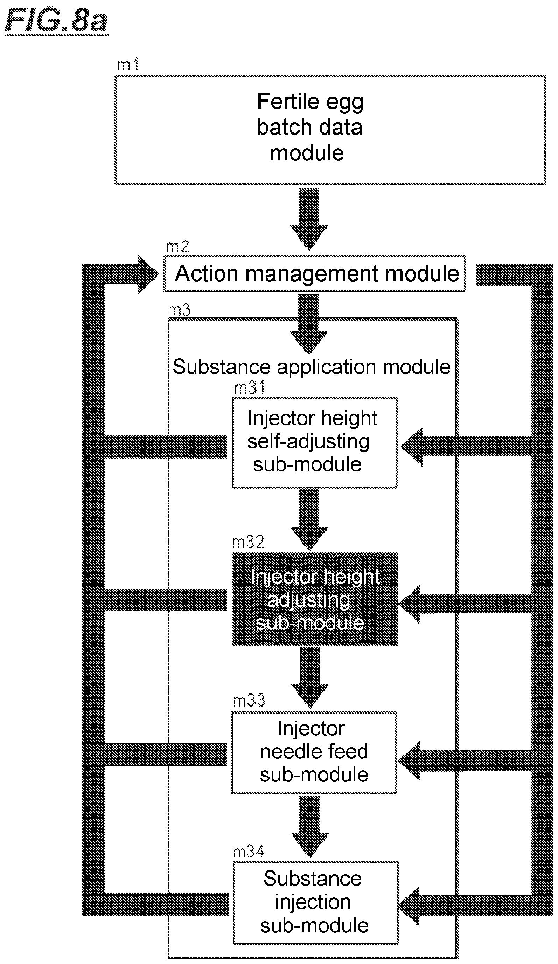

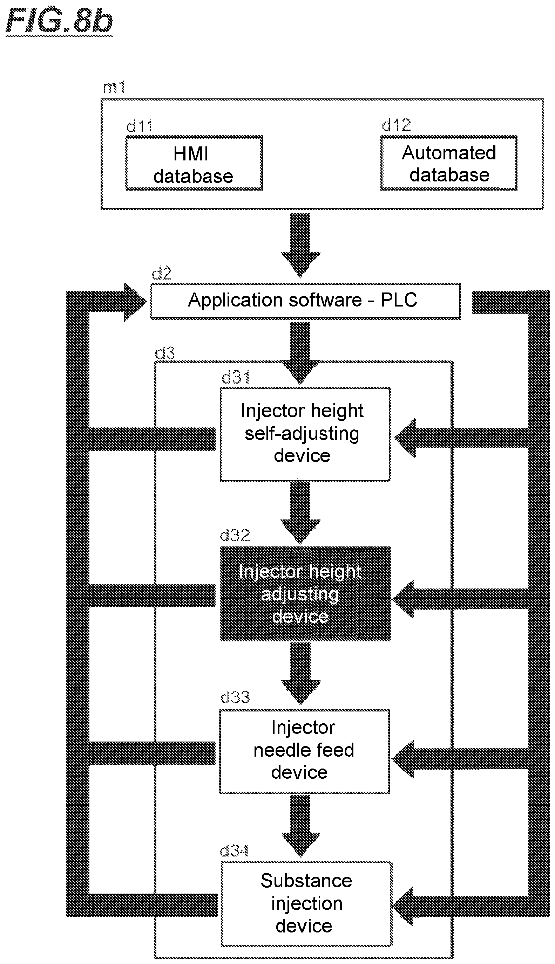

b.1 Constructive concept of the improved system for substance application: as shown in Fig. 7 and 3, the equipment includes as a technological base of the state of the art, the vertical displacement platform (1), support platform (2), injectors [3], injector locking device [4] and tray (5), in which the improvement is effectively done by the introduction of a displacement actuating device [6].
   This displacement binding device [6] has the function of promoting the proper height adjustment of the support plate [2], in accordance with the egg size [Og], [Om] or [Op], and is controlled by the application/PLC software [d2] of the management module [m1], and can be technically specified as pneumatic, electric or hydraulic actuator.
   [90] On the other hand, the information on the batch size of large eggs [Og], medium eggs [Om] or small eggs [Op] loaded in the tray [5], and deriving from the preliminary candling procedure is made possible for the application software/PLC [d2] of the management module [m1], which in turn, will be used to adjust the height of the support plate [2] through the actuator device [6] in accordance with the egg batch size [Ov].
b.2 Enhanced system architecture for the application of substances: the understanding of the constructive concept of all inventive intra-egg substance application equipment disclosed in Fig. 7 and duly described in detail, further subsidizes an improved intra-egg substance application system, as evidenced in Figs. 8a and 8b, whose macro system architecture is formed by the following functional modules:
   - Fertile egg size data module (m1), as shown in Fig. 8a, it is digitally loaded into an operational management system, where such data can be offered in two possible ways:
   - Human Machine Interface Data - HMI (d11), in which the system operator receives information on the average egg size from the batch which is loaded in the tray [5], being defined as among large eggs [Og], medium eggs [Om] and small eggs [Op], as carried out by human observation, or a printed or digital card;
   - Automated fertile egg mean data (d12), where the system operator receives information on the average egg size, being defined between large eggs [Og], medium eggs [Om] and small eggs [Op], and performed by means of an automated system for calculating the average size of a batch of fertile eggs, through numerous known technologies, among which the technique disclosed in the Brazilian patent No. BR1020150205112 entitled: "SISTEMA DE RECONHECIMENTO E CLASSIFICAÇÃO DA ALTURA DE OVOS FÉRTEIS ORIUNDOS DE ETAPA DE OVOSCOPIA E PROCEDIMENTO OPERACIONAL DE SEUS SUB-MODULOS E DE MÓDULOS DE APLICAÇÃO DE SUBSTÂNCIAS E NASCEDOURO" (SYSTEM FOR THE RECOGNITION AND CLASSIFICATION OF THE HEIGHT OF FERTILE EGGS FROM THE CANDLING STAGE AND THE OPERATIONAL PROCEDURE OF ITS SUB-MODULES AND OF THE MODULES FOR THE APPLICATION OF SUBSTANCES AND HATCHER), which more accurately defines the actual classification as mean size of large eggs, mean size of medium eggs and mean size of small eggs.
   - Action management module (m2), as shown in Figs. 8a and 8b, is formed by an application software (d21), which makes use of a logic programmer (PLC), which in essence has a function of controlling the operating sub-modules composing the substance application module [m3] and, in addition, and in a distinctive manner to that hitherto known in the prior art, receives data from the fertile egg size data module (M1) distinguishing the egg batch size between large eggs [Og], medium eggs [Om] and small eggs [Op], thereby defining the displacement value of the support plate [2] and sending the actuation signal with that displacement to the actuator device [6] of the sub-module adjusting the height of the injectors [m32];
   - Substance application module [m3]: where the improvement justifying the novelty requirement and inventive step of the present invention is effectively applied, formed of numerous operating sub-modules, wherein for the purpose of the present invention it is pertinent to describe:
   - Injector height self-adjusting sub-module [m31]: is identical to that of the conventional substance application module, which has the function of adjusting each lower end of each injector [3], is formed by the support plate [2] with embedded locking device [4], wherein in each niche of this support plate [2] are mounted respective injectors [3], wherein its operation is managed by the application software [d2] of the substance application module [m2];

   - Injector height adjusting sub-module [m32]: effectively represents the introduced improvement, and justifies the requirements of novelty, inventive act and industrial application, with the function of considering the variation/adjustment of the height of the support plate [2] of injectors [3] of substances [vaccine/nutrients] for suitability of the needle course [3a]/egg size ratio, batch of large eggs [Og] or batch of medium eggs [Om] or batch of small eggs [Op], for becoming operational depends on the signal with the "height displacement" operational variable sent by the action management module (m2) for batch of large eggs [Og] is defined a height displacement [Hg], for batch of medium eggs [Om] is defined a height displacement [Hm], and for batch of small eggs [Op] is defined a height displacement [Hp], always in relation to the zero point height [Hz], which by definition is defined by the contact position of the lower end of the injector [3] with the outer upper end of the eggshell [Ov];
   - Injector needle feed sub-module [m33]: is identical to that of the conventional substance application module, with the function of effectively promoting eggshell perforation [Ov] and immediate advancement of the injection needles [3a] of each injector [3] into the interior of the eggs [Ov], for the purpose of the present invention it is sufficient to mention that this module is composed by the injectors [3] wherein the punches [not shown] and needles [3a] are operated by the application software [d2] of the substance application module [m2]; and
   - Substance injection sub-module [m34]: also identical to that observed in the conventional substance application module, has the function of promoting the inoculation of substances inside the egg [Ov] through the needle [3a].

### b3. Improved substance application process:

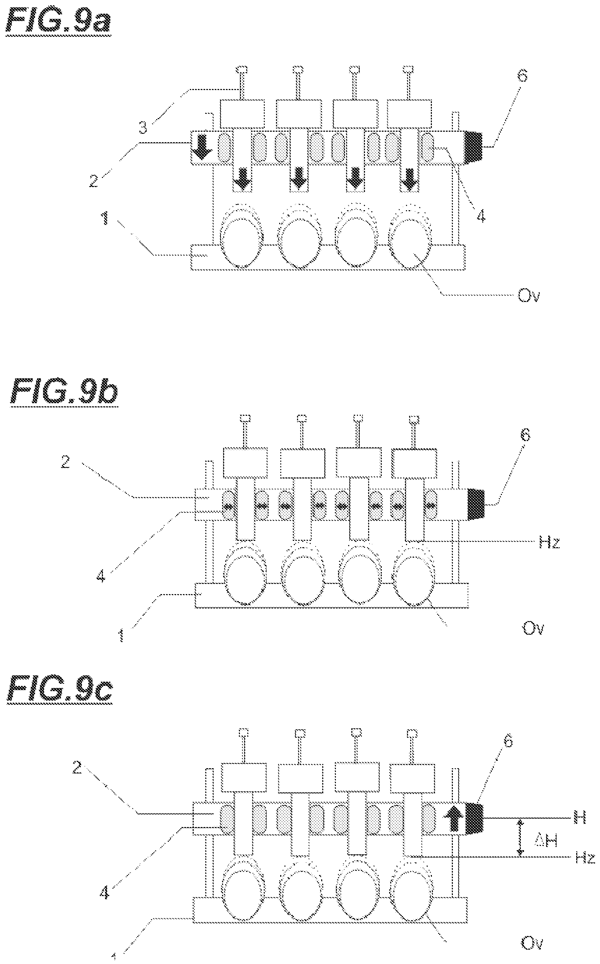

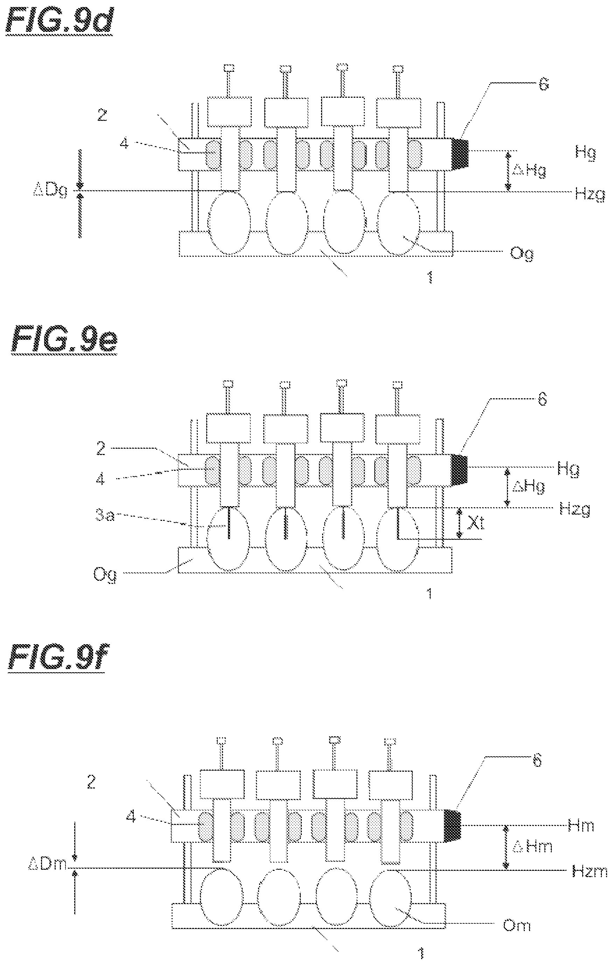

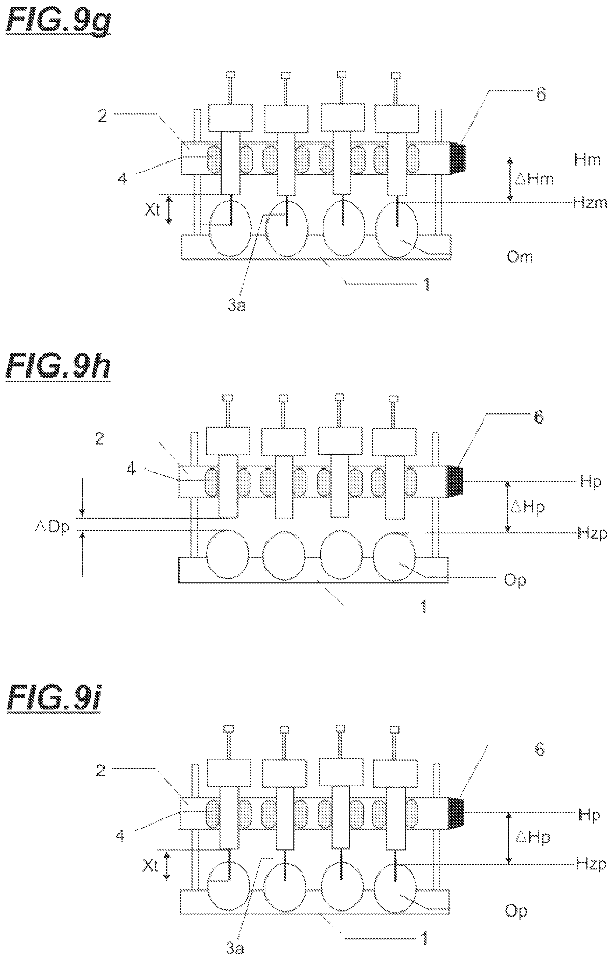

As in the conventional substance application module, the preliminary condition for the intra-egg application operation to occur is that a tray [5] duly filled with eggs [Ov] is positioned immediately below the support plate [2], once this condition is set, the conventional process of height adjustment of the lower end of the injectors [3] relative to the top of the eggshell [Ov] can be understand by the following sequential steps:
- Step 1 - As shown in Fig. 9a, it is identical to step 1 of the conventional procedure, where the locking device [4] present on the support plate [2] is not actuated, creating a condition wherein the plurality of injectors [3] with needle [3a] is released, wherein the management module [m1] sends a signal for the vertical downward displacement of the support plate [2] assembly with locking device [4] and plurality of injectors [3], this downward movement being managed by the application software/PLC [d2] of the management module [m2];
- Step 2 - As shown in Fig. 9b, where the vertical downward displacement of the support plate [2] assembly with locking device [4] and plurality of injectors [3], managed by the application software/PLC [d2] of the management module [m2] occurs until the contact moment is established between the injector [3]/eggs [Ov], once this contact is established, a signal is sent to the application software/PLC [d2] of the management module [m1], which, in turn, ceases the displacement of the support plate [2] and, consequently, of the plurality of injectors [3];
- Step 3 - As shown in Fig. 9b, upon cessation of the downward movement of the support plate [2] assembly and injectors [3], the same application software/PLC [d2] of the management module [m2] sends a signal by actuating the locking device [4], where the inflatable elements are inflated so that each injector [3] is fixed in the previously obtained position;
- Step 4 - As shown in Fig. 9b, where is obtained the injectors locking [3], the application software/PLC [d2] of the management module [m2] receives a record signal from the zero point height [Hz], which will be different for each of the possible egg sizes [Ov]; i.e., zero point height [Hzg] for batch of large eggs [Og]; zero point height [Hzm] for batch of medium eggs [Om] or zero point height [Hzp] for batch of small eggs [Op], where it calculates the vertical displacement [ΔH] of the support plate [2], see Fig. 9c, being previously defined a vertical displacement [ΔHg] for batch of large eggs [Og]; vertical displacement [ΔHm] for batch of medium eggs [Om] or vertical displacement [ΔHp] for batch of small eggs [Op], see Figs. 9d, 9f and 9h respectively.
- Step 5 - As shown in Figs. 9d, 9f and 9h, where the support plate [2] by means of the actuating component [6] is moved upwardly to the end position of the plate, being previously defined end plate position [H], with end plate position [Hg] for batch of large eggs [Og]; end plate position [Hm] for batch of medium eggs [Om] or end plate position [Hp] for batch of small eggs [Op];
   The cited displacements of the support plate [2] also converge to a ratio of distance from the lower end of the injectors [3] to the upper end of the outer surface of the eggshell [Ov], defined as [ΔD], more specifically as [ΔDg], for batch of large eggs [Og]; end plate position [ΔDm] for batch of medium eggs [Om] and end plate position [ΔDp] for batch of small eggs [Op].
- Step 6 - As shown in Figs. 9e, 9g and 9i, the same application software/PLC [d2] of the management module [m2] sends a signal to the injector needle feed sub-module [m33], the needles [3a] of each injector [3] advancing to the interior of the egg [Ov], always in full course [Xt] the particularity of this procedure being that the advance of the needles [3a] is in total course, i.e., does not depend on the egg size [Ov]; and
- Step 7 - As soon as the needles [3a] of the injectors [3] reach their end course as shown in Figs. 9e, 9g and 9i, a "end of needles course" signal is sent to the application software/PLC [d2] of the management module [m2] which releases the activation signal of the substance injection sub-module [m34], the substance [vaccine or nutrients] being released in the region of the amniotic fluid [O 4], especially in the useful area [Au] for injection of substances.

### b.4 Technical effect obtained:

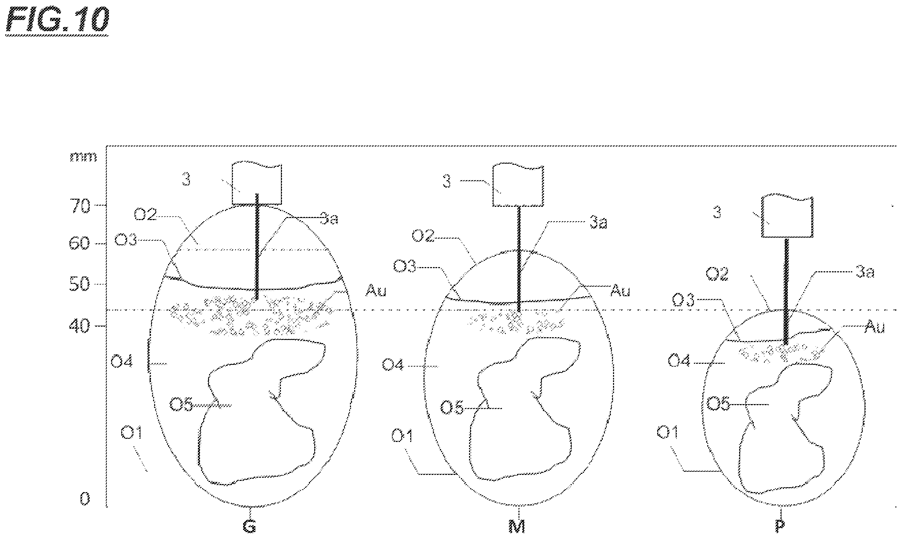

As it can be seen in the graph of Fig. 10,where again the alphanumeric references are described, such as egg [O1], shell [O2], amniotic fluid surface [O3], amniotic fluid volume [O4], embryo [O5], injector [3], injection needle [3a], where the area of injection of substances [Au], i.e. the volume of the upper region of the amniotic fluid [O4], is incorporated, in presence of the end of the injection needle [3a] without the embryo [O5] being at risk of being physically damaged.

The simple observation of the graph in Fig. 10 reveals that the procedure for the complete advancement of the needles [3a] is no longer harmful to the embryo [O5] when considering the size of the egg [Ov], i.e., the associated use with the injector height adjusting sub-module [m32] whose operation is controlled by the action management module [m2], which in turn, emits the vertical displacement signal [ΔH] of the support plate [2], for this uses the information of the fertile egg batch data module [m1], notably by defining the batch size class of eggs loaded in tray [5], i.e. large eggs [Og], medium eggs [Om] or small eggs [Op].

It is also relevant to draw attention to the technical factor where the distancing of the lower end of the injectors [3] with the upper end of the outer surface of the eggshell [Ov], defined as [ΔDg] for batch of large eggs [Og] is equal to or very close to zero. Finally, the distance [ΔDg] for batch of large eggs [Og] is smaller than the distance [ΔDm] for batch of medium eggs [Om], which, in turn, is smaller than the distancing [ΔHp] for batch of small eggs [Op], see Figs. 9d, 9f and 9h respectively, i.e., [ΔDg] < [ΔDm] < [ΔDp].

The choice of the preferred embodiment of the subject invention in this cartouche described in this detailing topic is given by way of example only. Changes, modifications, and variations can be made to any other embodiments of the sub-module and its device for varying/adjusting the height of the vaccine/nutrient injector support plate for suitability of needle course/egg size ratio applied in egg substance application module, changes which can be designed by those skilled in the art without, however, departing from the object disclosed in the present patent application, which is exclusively defined by the appended claims.

It is verified from what has been described and illustrated that the "SUB-MODULE AND ITS DEVICE FOR VARYING/ADJUSTING THE HEIGHT OF THE INJECTOR SUPPORT PLATE OF VACCINE/NUTRIENTS FOR SUITABILITY OF THE NEEDLE COURSE/EGG SIZE RATIO APPLIED IN A SUBSTANCE APPLICATION MODULE OF AN EGG VACCINATION/ NUTRITION SYSTEM AND EQUIPMENT" now claimed complies with the rules governing the patent in the light of the Industrial Property Law, deserving from what has been exposed and as a consequence, the respective privilege.

## Claims

1. Sub-module and device for varying/adjusting the height of the injector support plate of vaccine/nutrients for suitability of the needle course/egg size ratio applied in a substance application module, wherein the substance application system has an architecture formed by an action management module (m2), in the form of an application software (d21), which makes use of a logic programmer (PLC) associated with a substance application module [m3] which, in turn, is formed by an injector height self-adjusting sub-module [m31], which is formed by a support plate [2] with an embedded locking device [4], wherein in each niche of this support plate [2] are mounted respective injectors [3], wherein its operation is managed by the application software [d2] of the substance application module [m2]; an injector needle feed sub-module [m33] formed by the plurality of injectors [3] wherein the punchers and needles [3a] are operated by the application software [d2] of the substance application module [m2] and substance injection sub-module [m34], whose distinctiveness is **characterized in that**, before the action management module [m2] a fertile egg size data module (m1) is introduced, which provides for human machine interface - HMI (d11) data or automated fertile egg mean data (d12) and to the substance application module [m3], immediately after the injector height self-adjusting sub-module [m31] is introduced, an injector height adjusting sub-module [m32] in the form of an actuator [6] mounted on the support plate [2] with the suitability on the needle course [3a]/egg size [Ov] ratio, which depends on the "height displacement" operational variable signal sent by the action management module (m2); wherein for batch of large eggs [Og] is defined a height displacement [Hg], for batch of medium eggs [Om] is defined a height displacement [Hm], and for batch of small eggs [Op] is defined a height displacement [Hp], always in relation to the zero point height [Hz] which is the contact position of the lower end of the injector [3] with the outer upper end of the eggshell [Ov].

2. Sub-module and device for varying/adjusting the height of the injector support plate of vaccine/nutrients for suitability of the needle course/egg size ratio applied in a substance application module according to claim 1, wherein the actuator device [6] is **characterized in that** it is a pneumatic actuator.

3. Sub-module and device for varying/adjusting the height of the injector support plate of vaccine/nutrients for suitability of the needle course/egg size ratio applied in a substance application module according to claim 1, wherein the actuator device [6] is **characterized in that** it is an electric actuator.

4. Sub-module and device for varying/adjusting the height of the injector support plate of vaccine/nutrients for suitability of the needle course/egg size ratio applied in a substance application module according to claim 1, wherein the actuator device [6] is **characterized in that** it is a hydraulic actuator.

5. Sub-module and device for varying/adjusting the height of the injector support plate of vaccine/nutrients for suitability of the needle course/egg size ratio applied in a substance application module, wherein the improved substance application process is **characterized by** the sequential steps:
- Step 1, the locking device [4] present on the support plate [2] is not actuated, creating a condition wherein the plurality of injectors [3] with needle [3a] is released, wherein the management module [m1] sends a signal for the vertical downward displacement of the support plate [2] assembly with locking device [4] and plurality of injectors [3], this downward movement being managed by the application software/PLC [d2] of the management module [m2];
- Step 2, the vertical downward displacement of the support plate [2] assembly with locking device [4] and plurality of injectors [3], managed by the application software/PLC [d2] of the management module [m2] occurs until the contact moment is established between the injector [3]/eggs [Ov], once this contact is established, a signal is sent to the application software/PLC [d2] of the management module [m1], which, in turn, ceases the displacement of the support plate [2] and, consequently, of the plurality of injectors [3];
- Step 3, upon cessation of the downward movement of the support plate [2] assembly and injectors [3], the same application software/PLC [d2] of the management module [m2] sends a signal by actuating the locking device [4], where the inflatable elements are inflated so that each injector [3] is fixed in the previously obtained position;
- Step 4, once the injectors [3] are locked, the application software/PLC [d2] of the management module [m2] receives a zero offset height signal [Hz] and calculates the vertical displacement [ΔH] of the support plate [2];
- Step 5, the support plate [2] by means of the actuator component [6] is moved upwards to the end position of the plate [H], where the displacements of the support plate [2], converge to a ratio of distance from the lower end of the injectors [3] to the upper end of the outer surface of the eggshell [Ov], defined as [ΔD];
- Step 6, the application module/PLC [d2] of the management module [m2] sends a signal to the injector needle feed sub-module [m33], the needles [3a] of each injector [3] advancing to the interior of the egg [Ov], always in full course [Xt] the particularity of this procedure being that the advance of the needles [3a] is in total course;
- Step 7 as soon as the needles [3a] of the injectors [3] reach their end course, a "end of needles course " signal is sent to the application software/PLC [d2] of the management module [m2] which releases the activation signal of the substance injection sub-module [m34], the substance being released in the region of the amniotic fluid [O 4], especially in the useful area [Au].

6. Sub-module and device for varying/adjusting the height of the injector support plate of vaccine/nutrients for suitability of the needle course/egg size ratio applied in a substance application module, according to claim 5, wherein in Step 4, the zero point height [Hz] is **characterized in that** it is zero point height [Hzg] for batch of large eggs [Og]; zero point height [Hzm] for batch of medium eggs [Om] or zero point height [Hzp] for batch of small eggs [Op].

7. Sub-module and device for varying/adjusting the height of the injector support plate of vaccine/nutrients for suitability of the needle course/egg size ratio applied in a substance application module according to claim 5, wherein in Step 4, where the vertical displacement [ΔH] of the support plate [2], is **characterized in that** it is a vertical displacement [ΔHg] for batch of large eggs [Og]; vertical displacement [ΔHm] for batch of medium eggs [Om] or vertical displacement [ΔHp] for batch of small eggs [Op].

8. Sub-module and device for varying/adjusting the height of the injector support plate of vaccine/nutrients for suitability of the needle course/egg size ratio applied in a substance application module according to claim 5, wherein in Step 5, the end position of the plate [H] is **characterized in that** it is an end plate position [Hg] for batch of large eggs [Og]; end plate position [Hm] for batch of medium eggs [Om] or end plate position [Hp] for batch of small eggs [Op].

9. Sub-module and device for varying/adjusting the height of the injector support plate of vaccine/nutrients for suitability of the needle course/egg size ratio applied in a substance application module according to claim 5, wherein in Step 5, where the distance ratio of the lower end of the injectors [3] to the upper end of the outer surface of the eggshell [Ov], defined as [ΔD] is **characterized in that** it is [ΔDg], for batch of large eggs [Og]; end plate position [ΔDm] for batch of medium eggs [Om] and end plate position [ΔDp] for batch of small eggs [Op].

10. Sub-module and device for varying/adjusting the height of the injector support plate of vaccine/nutrients for suitability of the needle course/egg size ratio applied in a substance application module according to claim 9, wherein the distance from the lower end of the injectors [3] to the upper end of the outer surface of the eggshell [Ov], defined as [ΔDg] for batch of large eggs [Og] is **characterized in that** it is equal to or very close to zero.

11. Sub-module and device for varying/adjusting the height of the injector support plate of vaccine/nutrients for suitability of the needle course/egg size ratio applied in a substance application module according to claim 9, wherein the distance [ΔD] is **characterized in that** the distance [ΔDg] for batch of large eggs [Og] is smaller than the distance [ΔDm] for batch of medium eggs [Om], which, in turn, is smaller than the distancing [ΔHp] for batch of small eggs [Op].
